# EUROPEAN PATENT SPECIFICATION

(11) **EP 3 032 151 B1**
(45) Date of publication and mention of the grant of the patent: **10.05.2017**
(21) Application number: 15197499.5
(22) Date of filing: 02.12.2015
(51) Int. Cl.: F16K 31/52, F16K 31/04

(54) **METHOD AND DRIVE UNIT FOR A SWITCHING VALVE**
VERFAHREN UND ANTRIEBSEINHEIT FÜR EINE SCHALTKLAPPE
PROCÉDÉ ET UNITÉ D'ENTRAÎNEMENT POUR UNE SOUPAPE DE COMMUTATION

(30) Priority: 03.12.2014 DE 102014117800
(43) Date of publication of application: 15.06.2016
(73) Proprietor: Johnson Electric S.A., 3280 Murten (CH)
(72) Inventor: Waehrisch, Sten, Hong Kong (HK); Gassmann, Joerg, Hong Kong (HK); Fraulob, Sebastian, Hong Kong (HK); Pahner, Daniel, Hong Kong (HK)
(74) Representative: Hocking, Adrian Niall

(56) References cited:
- WO-A1-2013/032186
- WO-A1-2013/167704
- DE-A1-102012 106 281

## Description

### FIELD OF THE INVENTION

This invention relates to a method and a drive unit for a switching valve for heating devices.

### BACKGROUND OF THE INVENTION

Principally, a whole range of different individual technical solutions with mainly two drive concepts are already known for switching valves for heating devices. At present, either linear stepper motors or rotating synchronous motors with downstream gear mechanisms are preferably used in heating devices. The advantage of linear stepper drives lies notably in the exactly definable and exactly adjustable travel path of the valve disc in the switching valve based on a precise step specification. The speed of the switching process is therein controlled by the specified step speed, though also limited by it. The great disadvantage of these linear stepper drives is, however, that stepper drives require an extensive and costly actuation.

This disadvantage is countered by using rotating drives, mostly synchronous motors, with appropriate downstream gear mechanisms which convert the rotary motion of an electric motor into a translatory motion of the sealing body of the switching valve. While these rotating drives have the advantage of simple actuation, the force transmission has so far been unidirectional. This means that the actuators can only push the valve rod in one direction. To achieve the necessary sealing force in both valve end positions, the rotating drive, while pushing the valve rod into the valve seat, must at the same time pre-load an appropriately designed return element. Due to this construction, the rotating drive is designed such that it must exert at least a force that corresponds to double the sealing force.

Another disadvantage of this drive variant is that generally no exactly defined travel path can be adjusted. Furthermore, the speed and closing force in these drive solutions is neither controllable nor constant over the entire travel path.

EP 2 126 431 B1 describes a drive unit for the actuation of fluid valves which are designed constructively small and short with a self-supporting casing. The drive unit is configured to be deactivatable in its end positions. The drive is by means of a rotating synchronous motor which moves specially configured cam profiles against each other and thus generates a translatory motion from the rotary motion. However, this drive unit is only suited for small translatory motions (relatively short travel paths) since the sliding of the cam flanks on each other results in excessive friction for large gradients and the advantage of low energy expenditure would thus be neutralized. This solution also includes the disadvantages mentioned above that the drive must exert double the sealing force due to its unidirectional coupling and that the entire travel path must be passed at constant speed and constant closing force.

WO2013/032186, WO2013/167704 and DE102012106281 all describe methods of operating a switching valve utilising a cam mechanism.

### SUMMARY OF THE INVENTION

Hence there is a desire for a new method of operating a switching valve for heating devices where the drive unit is intended to be designed constructively very small, yet to exert sufficient closing force for such switching valves, to seal the switching valve securely and permanently in the respective valve position. It is also desirable for the drive unit to realize large adjustment travel paths and to allow simple actuation and operation as well as to allow a variation of speed and force over the travel path despite a continuously operating drive.

Accordingly, in one aspect thereof, the present invention provides a method for the translatory actuation of a switching valve according to claim 1.

Preferably, the drive unit is designed as a bidirectional force generator and exerts a non-linear displacement-time motion or a non-linear displacement-force behaviour on the valve actuating rod of the switching valve in both directions by means of a coupling point.

According to a second aspect, the present invention provides a drive unit for translatory actuation of a switching valve for heating devices, according to claim 3.

Preferably, a spring element is arranged in the flow of forces of the gear mechanism such that the position of the coupling point of the translatory output is variable by retroactive forces from the valve actuating rod.

Preferably, the gear mechanism for converting the rotary motion into a linear motion is configured as a slider-crank mechanism, a crank wheel is driven by the rotating drive and the valve actuating rod is translatorily moved by means of a rocker arm and a coupling point, and the position of the pivot point of the rocker arm is variable by means of a spring element as a function of force.

Alternatively, the gear mechanism for converting the rotary motion into a linear motion is designed as a slider-crank mechanism, and a crank wheel is driven by the rotating drive and the valve actuating rod is translatorily moved by means of a resilient rocker arm and a coupling point.

Preferably, a mechanical position indicator is arranged such that it is visible from the outside, indicating that the valve actuating rod is in a valve end position.

Optionally, a mechanical position indicator is arranged such that it is visible from outside the housing, and the crank wheel has a position contour which moves the position indicator along a guided path in the housing, indicating that the valve actuating rod of the switching valve is located in one of the valve end positions.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labelled with a same reference numeral in all the figures in which they appear. Dimension of components and features shown in the figures are generally chosen for convenience and clarity of presentation and are not necessarily shown to scale. The figures are listed below.
Fig. 1 shows the outside of a drive unit with a possible embodiment of a switching valve shown at the bottom.
Fig. 2 shows the construction of a drive unit with a gear mechanism with a rigid rocker arm and spring element.
Fig. 3 shows the construction of a drive unit with a slider-crank mechanism with a resilient rocker arm instead of a rigid rocker arm and spring element.
Fig. 4a shows the construction of a drive unit with a position indicator in a valve end position.
Fig. 4b shows the construction of the drive unit of Fig. 4a, with the position indicator in an intermediate valve position.
Fig. 5 shows the construction of a drive unit with a cam mechanism.
Fig. 6 shows the construction of a drive unit with a linkage mechanism.

### DETAILED DESCRIPTION OF THE PREFERRED EMBODIMENTS

The method of the invention for translatory actuation of a switching valve 2 by means of a drive unit 1 for heating devices with a rotating drive 3, a gear mechanism 7 with electric deactivation of the drive in the valve end positions, is configured such that the drive unit 1 exerts a non-linear displacement-time motion and/or a non-linear displacement-force behaviour on the linear actuation of a valve actuating rod 4 of the switching valve 2 in an innovative manner. This makes it possible for a sufficient closing force to be exerted nonetheless on the valve actuating rod 4 of the switching valve 2 and also that a valve disc can be positioned and held in its end position such as to be reliably sealed. The application requires a relatively large closing force in either valve end position for secure sealing, but only little force over the free travel path between these end positions. The drive unit moves the valve disc between the two valve end positions at as high a speed as possible, but travels the last part of the travel path at a significantly reduced speed to move to the end positions (into the valve seats). Thus, this ensures fastest possible switching of the valve, which at the same time prevents unfavourable flow conditions in the hydraulic system of the heating system.

If the drive unit 1 is configured as a bidirectional force generator and a non-linear displacement-time motion or a non-linear displacement-force behaviour is exerted on the linear actuation of the valve actuating rod 4 of the switching valve 2 by means of a coupling point 12, the valve actuating rod 4 can not only be moved with little energy expenditure but also be held in its two end positions despite the low energy input, with the required closing force exerted on a coupled valve disc at the same time so that the switching valve 2 seals reliably in either of its two positions.

The drive unit 1 for a translatorily actuated switching valve 2 for heating devices is operated by a rotating drive 3 and is provided with a gear mechanism 7 and a switch 19 for electrical deactivation of the drive in the valve end positions or at least near the dead centre of the gear mechanism 7. The gear mechanism 7 is designed such that when the rotating drive 3 is in continuous motion the translatorily moving output of the gear mechanism 7 has a defined non-linear displacement-time motion and/or a non-linear displacement-force behaviour in both directions. As is generally shown, the drive unit 1 has a housing, comprising a cover 5 and a base 6, where the gear mechanism 7 for converting the rotary motion is arranged and a switch 19 for switching the drive is disposed.

The sealing force and the tightness of the seal of the valve disc can be improved further if a spring element 14 is arranged in the drive unit 1 between the rotating drive 3 and the linear actuation of the valve actuating rod 4.

Preferably, the gear mechanism 7 for converting the rotary motion into a linear motion is configured as a slider-crank mechanism 10. Therein an arranged crank wheel 15 is driven by the rotating drive 3, the valve actuating rod 4 being translatorily moved by a rocker arm 16 and a coupling point 12. The position of the pivot point of the rocker arm 16 is variable as a function of force by means of a spring element 14 arranged within the crank wheel 15.

In a modification of the drive unit 1, the gear mechanism 7 for converting the rotary motion into a linear motion can be configured as a slider-crank mechanism 10. Therein the crank wheel 15 is driven by the rotating drive 3 and the valve actuating rod 4 is translatorily moved by means of a rocker arm 16 and a coupling point 12. Herein, a spring element 14 is also arranged within the crank wheel 15 such that the position of the pivot point of the rocker arm 16 is configured to be variable as a function of force.

In a slightly modified variant, when the gear mechanism 7 for converting the rotary motion into a linear motion is designed as a slider-crank mechanism 10, it is also possible that the crank wheel 15 is driven by the rotating drive 3 and the valve actuating rod 4 is translatorily moved by means of a resilient rocker arm 17 and a coupling point 12. In this embodiment, the function of the spring element is provided by the resilient rocker arm.

Alternatively, the gear mechanism 7 for converting the rotary motion of the drive 1 into a linear motion for translatory actuation of a switching valve 2 may be designed as a linkage mechanism 8, such as it can be implemented in a simple manner by means of a suitable arrangement of spur gears and several coupling links 13.

To monitor operation of the drive unit 1 and switching valve 2 as well as to facilitate maintenance work, it is preferable that a position indicator 21 indicating the position of the valve disc of the switching valve 2 is arranged and visible on the drive unit 1 from the outside.

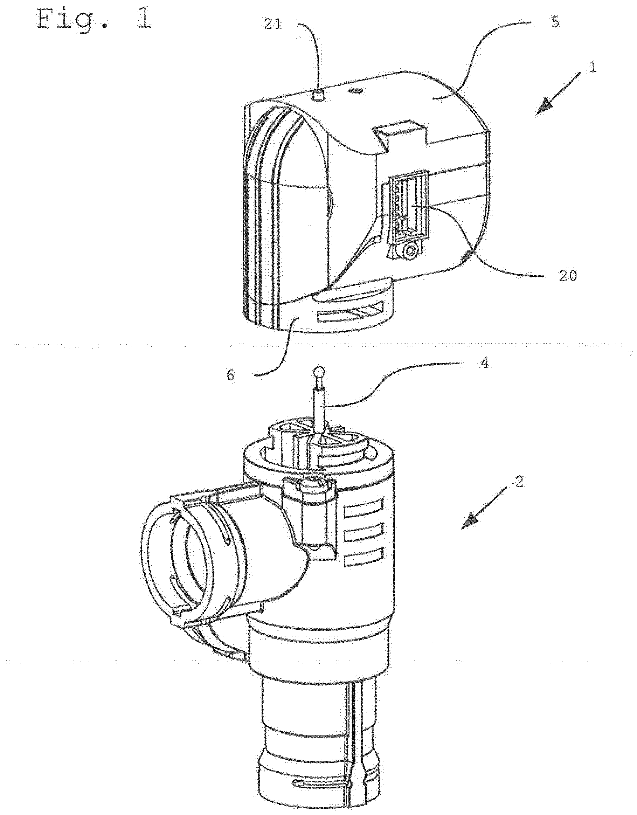

Fig. 1 shows an exterior view of a drive unit 1 in the upper part, and below a possible embodiment of a switching valve 2 to be actuated by means of a valve actuating rod 4. The position indicator 21 is visible on the cover 5 of the drive unit 1, allowing the position of the valve disc of the switching valve 2 to be recognized. Inside the housing at the side, the plug connection 20 can be seen inside arranged on and fastened to the base 6. The foot of the base 6 is configured such that it can be coupled to the switching valve 2 in a simple manner using a kind of bayonet catch.

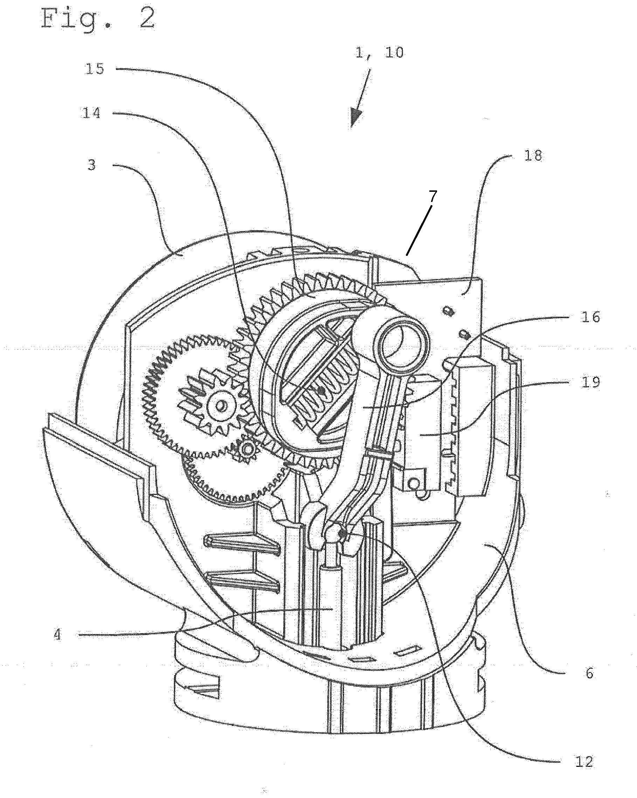

Fig. 2 shows the inside construction of a drive unit 1 with a slider-crank mechanism 10 (here with an interposed spur gear mechanism) driven by means of the shaft of the rotating drive 3. The gear mechanism 7 is supported by the base 6. Arranged on a spur gear, the crank wheel 15 is used to actuate the switch 19 for switching the rotating drive 3 on and off. A spring element 14 is arranged within the crank wheel 15. This spring element 14 is supported on one side inside the crank wheel 15 at a fixed point. At the other end of the spring element 14, a bearing journal on which the rigid rocker arm 16 is supported is guided radially movable in the crank wheel 15.

The rocker arm 16 is linked with the valve actuating rod 4 at the coupling point 12 by means of a connecting rod bearing. This construction makes it possible that the continuous rotary motion of the driven shaft of the rotating drive 3 exerts not only a bidirectional translatory motion but also a non-linear displacement-time motion and/or a non-linear displacement-force behaviour on the valve disc of the switching valve 2 via the valve actuating rod 4 by means of the spring-loaded support and guidance of the rocker arm 16. After the rotating drive 3 is switched off, a certain closing force always acts on the valve disc so that reliable sealing of the switching valve can be ensured. The related wiring and circuits to connect the drive 3 with the switch 9 and, if applicable, any electronic components are arranged on the wiring board 18.

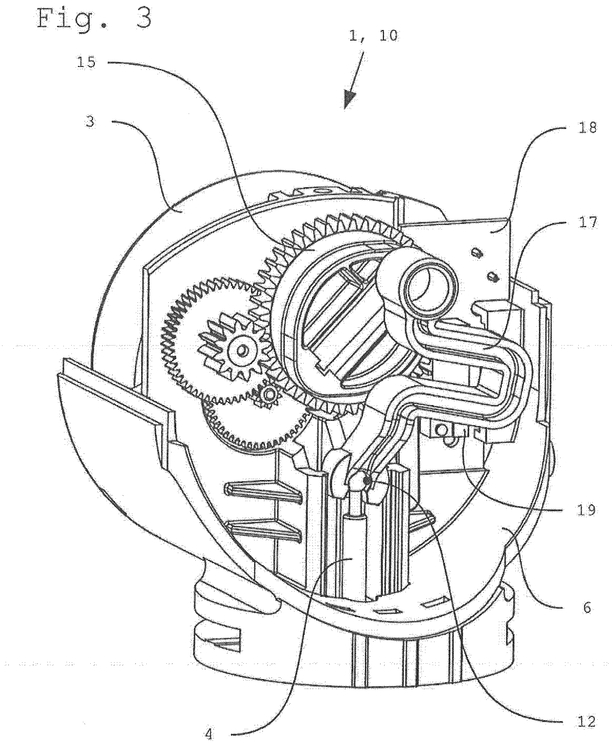

Fig. 3 shows the construction of a drive unit 1 with a slider-crank mechanism 10 with a resilient rocker arm 17 instead of a spring element. Herein the resilient rocker arm 17 assumes the function of the spring element. The resilient rocker arm 17 is firmly supported on a bearing journal in the crank wheel 15.

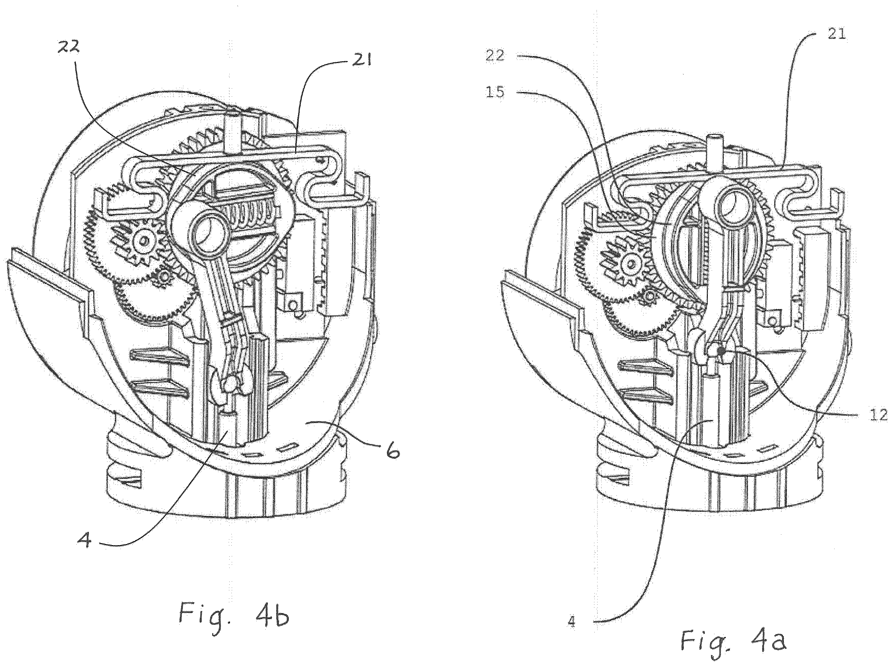

Figures 4a and 4b show the construction and operation of the position indicator 21. In the upper position of the position indicator 21 according to Fig. 4a, the valve disc is in an end position. The position indicator 21 is designed in a simple manner as an element guided in the housing and protrudes through the cover 5 to be visible when the valve disc is in an end position. It is supported on the position contour 22 and is forcibly moved by the contour. Fig. 4b shows an intermediate position of the position indicator 21. The valve disc is in an intermediate position. If driven further, the valve disc is moved to the second end position by means of the valve actuating rod 4 and the position indicator 21 is moved up again, i.e. the visible part of the position indicator 21 protrudes through the cover 5 and is therefore easy to read.

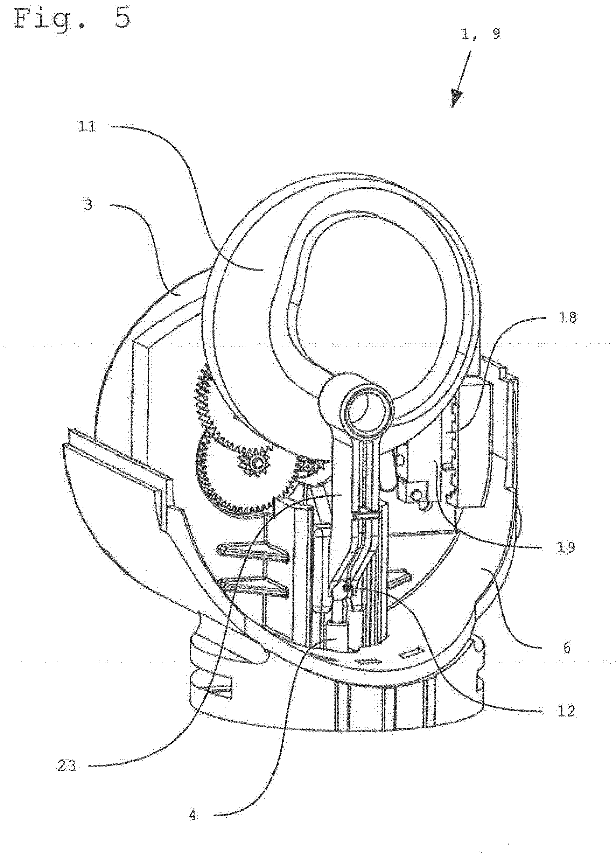

Fig. 5, which is not part of the present invention, shows the possible construction of a drive unit 1 in an embodiment with a cam mechanism 9 with the cam disc 11 and a tappet 23 for the transmission of force to the valve actuating rod 4.

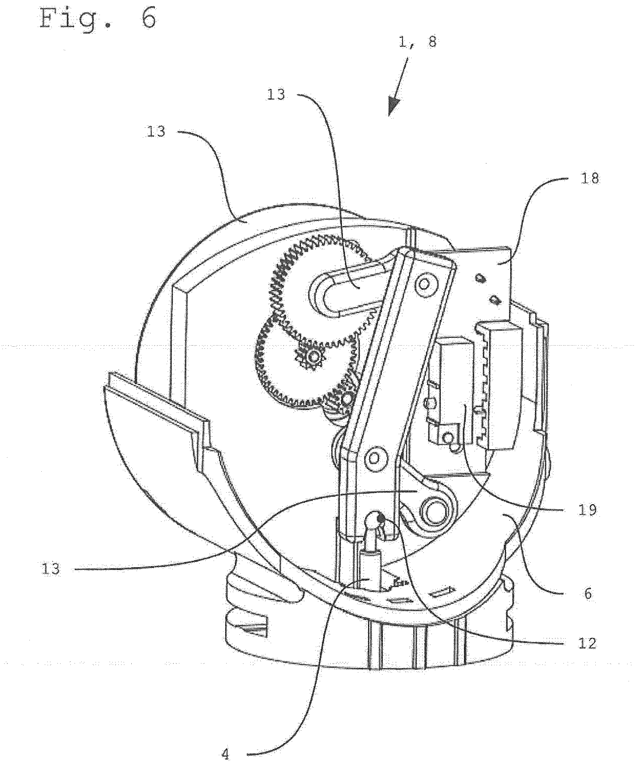

Fig. 6 shows the construction of a drive unit 1 with a linkage mechanism 8. Between a reduction gear and the valve actuating rod 4 for adjusting the valve disc of the switching valve 2, several coupling links 13 are arranged for force transmission such that the rotary drive motion is converted into a translatory output motion of the coupling point 12.

The technical solution described above is primarily usable as a drive for switching valves for the supply of hot water to various heating circuits for heating devices of different size.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. Method for the translatory actuation of a switching valve (2) for heating devices by means of a drive unit (1) with a rotating drive (3), a gear mechanism (7) and electrical deactivation of the drive in the valve end positions, the drive unit (1) exerting a non-linear displacement-time motion and/or a non-linear displacement-force behaviour on the valve actuating rod (4) of the switching valve (2),
**characterized in that** the gear mechanism converts the rotary motion of the drive (3) into a linear motion and includes a linkage mechanism (8) or a slider-crank mechanism (10) comprising a crank wheel (15) and a rocker arm (16, 17).

2. Method for the translatory actuation of the switching valve (2) according to Claim 1, wherein the drive unit (1) is designed as a bidirectional force generator and exerts a non-linear displacement-time motion or a non-linear displacement-force behaviour on the valve actuating rod (4) of the switching valve (2) in both directions by means of a coupling point (12).

3. Drive unit for translatory actuation of a switching valve (2) for heating devices, comprising a rotating drive (3), a gear mechanism and switch for electrical deactivation of the drive in the valve end positions, the gear mechanism (7) is configured for converting the rotary motion into a linear motion such that when the rotating drive (3) is in continuous motion the translatorily moving output of the gear mechanism produces a non-linear displacement-time motion and/or a non-linear displacement-force behaviour in both directions of motion,
**characterized in that** the rotating drive (3), the gear mechanism (7) and the switch (17) are arranged in a base (6), and
the gear mechanism (7) includes a linkage mechanism (8) or a slider-crank mechanism (10) comprising a crank wheel (15) and a rocker arm (16, 17).

4. Drive unit for translatory actuation of a switching valve (2) for heating devices according to Claim 3, wherein a spring element (14) is arranged in the flow of forces of the gear mechanism (7) such that the position of the coupling point (12) of the translatory output is variable by retroactive forces from the valve actuating rod (4).

5. Drive unit for translatory actuation of a switching valve (2) for heating devices according to Claim 3 or 4, wherein the gear mechanism (7) for converting the rotary motion into a linear motion is configured as a slider-crank mechanism (10), the crank wheel (15) is driven by the rotating drive (3) and the valve actuating rod (4) is translatorily moved by means of the rocker arm (16) and a coupling point (12), and the position of the pivot point of the rocker arm (16) is variable by means of a spring element (14) as a function of force.

6. Drive unit for translatory actuation of a switching valve (2) for heating devices according to Claim 3 or 4, wherein the gear mechanism (7) for converting the rotary motion into a linear motion is designed as a slider-crank mechanism (10), and the crank wheel (15) is driven by the rotating drive (3) and the valve actuating rod (4) is translatorily moved by means of the rocker arm (17) and a coupling point (12), wherein the arm (17) is a resilient rocker arm (17).

7. Drive unit for translatory actuation of a switching valve (2) for heating devices according to any one of Claims 3 to 6, wherein a mechanical position indicator (21) is arranged such that it is visible from the outside, indicating that the valve actuating rod (4) of the switching valve (2) is located in a valve end position.

8. Drive unit for translatory actuation of a switching valve (2) for heating devices according to Claim 5 or 6, wherein a mechanical position indicator (21) is arranged such that it is visible from outside, and
the crank wheel (15) has a position contour (22) which moves the position indicator (21) along a guided path in the housing, indicating that the valve actuating rod (4) of the switching valve (2) is located in a valve end position.

## Patentansprüche

1. Verfahren zur translatorischen Betätigung einer Schaltklappe (2) für Heizvorrichtungen mittels einer Antriebseinheit (1) mit einem Drehantrieb (3), einem Getriebemechanismus (7) und elektrischer Deaktivierung des Antriebs in den Klappenendpositionen, wobei die Antriebseinheit (1) eine nichtlineare Weg-Zeit-Bewegung und/oder ein nichtlineares Weg-Kraft-Verhalten auf die Klappenbetätigungsstange (4) der Schaltklappe (2) ausübt,
**dadurch gekennzeichnet, dass** der Getriebemechanismus die Drehbewegung des Antriebs (3) in eine lineare Bewegung umwandelt und einen Verbindungsmechanismus (8) oder einen Schubkurbelmechanismus (10) aufweist, der ein Kurbelrad (15) und einen Kipphebel (16, 17) umfasst.

2. Verfahren zur translatorischen Betätigung der Schaltklappe (2) nach Anspruch 1, wobei die Antriebseinheit (1) als ein bidirektionaler Kraftgenerator ausgelegt ist und eine nichtlineare Weg-Zeit-Bewegung oder ein nichtlineares Weg-Kraft-Verhalten auf die Klappenbetätigungsstange (4) der Schaltklappe (2) in beiden Richtungen mittels einer Kopplungsstelle (12) ausübt.

3. Antriebseinheit zur translatorischen Betätigung einer Schaltklappe (2) für Heizvorrichtungen, umfassend einen Drehantrieb (3), einen Getriebemechanismus und einen Schalter zur elektrischen Deaktivierung des Antriebs in den Klappenendpositionen, wobei der Getriebemechanismus (7) zum Umwandeln der Drehbewegung in eine lineare Bewegung konfiguriert ist, sodass, wenn sich der Drehantrieb (3) in kontinuierlicher Bewegung befindet, die translatorische Bewegungsausgabe des Getriebemechanismus eine nichtlineare Weg-Zeit-Bewegung und/oder ein nichtlineares Weg-Kraft-Verhalten in beide Bewegungsrichtungen erzeugt,
**dadurch gekennzeichnet, dass** der Drehantrieb (3), der Getriebemechanismus (7) und der Schalter (17) in einer Basis (6) angeordnet sind und der Getriebemechanismus (7) einen Verbindungsmechanismus (8) oder einen Schubkurbelmechanismus (10) aufweist, der ein Kurbelrad (15) und einen Kipphebel (16, 17) umfasst.

4. Antriebseinheit zur translatorischen Betätigung einer Schaltklappe (2) für Heizvorrichtungen nach Anspruch 3, wobei ein Federelement (14) im Fluss der Kräfte des Getriebemechanismus (7) angeordnet ist, sodass die Position der Kopplungsstelle (12) der translatorischen Ausgabe durch retroaktive Kräfte von der Klappenbetätigungsstange (4) variabel ist.

5. Antriebseinheit zur translatorischen Betätigung einer Schaltklappe (2) für Heizvorrichtungen nach Anspruch 3 oder 4, wobei der Schaltmechanismus (7) zum Umwandeln der Drehbewegung in eine lineare Bewegung als ein Schubkurbelmechanismus (10) konfiguriert ist, das Kurbelrad (15) von dem Drehantrieb (3) angetrieben wird und die Klappenbetätigungsstange (4) translatorisch mittels des Kipphebels (16) und einer Kopplungsstelle (12) bewegt wird, und
die Position des Schwenkpunktes des Kipphebels (16) mittels eines Federelements (14) in Abhängigkeit einer Kraft variabel ist.

6. Antriebseinheit zur translatorischen Betätigung einer Schaltklappe (2) für Heizvorrichtungen nach Anspruch 3 oder 4, wobei der Schaltmechanismus (7) zum Umwandeln der Drehbewegung in eine lineare Bewegung als ein Schubkurbelmechanismus (10) ausgelegt ist und das Kurbelrad (15) von dem Drehantrieb (3) angetrieben wird und die Klappenbetätigungsstange (4) translatorisch mittels des Kipphebels (17) und einer Kopplungsstelle (12) bewegt wird, wobei der Arm (17) ein nachgiebiger Kipphebel (17) ist.

7. Antriebseinheit zur translatorischen Betätigung einer Schaltklappe (2) für Heizvorrichtungen einem der Ansprüche 3 bis 6, wobei eine mechanische Positionsanzeige (21) derart angeordnet ist, dass sie von der Außenseite sichtbar ist, was anzeigt, dass sich die Klappenbetätigungsstange (4) der Schaltklappe (2) in einer Klappenendposition befindet.

8. Antriebseinheit zur translatorischen Betätigung einer Schaltklappe (2) für Heizvorrichtungen nach Anspruch 5 oder 6, wobei eine mechanische Positionsanzeige (21) derart angeordnet ist, dass sie von außen sichtbar ist, und
das Kurbelrad (15) eine Positionskontur (22) aufweist, welche die Positionsanzeige (21) entlang eines geführten Pfades in dem Gehäuse bewegt, was anzeigt, dass sich die Klappenbetätigungsstange (4) der Schaltklappe (2) in einer Klappenendposition befindet.

## Revendications

1. Procédé pour l'actionnement translatoire d'une soupape de commutation (2) pour des dispositifs de chauffage à l'aide d'une unité d'entraînement (1) avec un entraînement rotatif (3), un mécanisme d'engrenage (7) et la désactivation électrique de l'entraînement dans les positions d'extrémité de soupape, l'unité d'entraînement (1) exerçant un mouvement de temps de déplacement non linéaire et/ou un comportement de force de déplacement non linéaire sur la tige d'actionnement de soupape (4) de la soupape de commutation (2), **caractérisé en ce que** le mécanisme d'engrenage convertit le mouvement rotatif de l'entraînement (3) en un mouvement linéaire et inclut un mécanisme de liaison (8) ou un mécanisme bielle-manivelle (10) comprenant une roue de manivelle (15) et un culbuteur (16, 17).

2. Procédé pour l'actionnement translatoire de la soupape de commutation (2) selon la revendication 1, dans lequel l'unité d'entraînement (1) est conçue comme un générateur de force bidirectionnelle et exerce un mouvement de temps de déplacement non linéaire ou un comportement de force de déplacement non linéaire sur la tige d'actionnement de soupape (4) de la soupape de commutation (2) dans les deux directions à l'aide d'un point de couplage (12).

3. Unité d'entraînement pour l'actionnement translatoire d'une soupape de commutation (2) pour des dispositifs de chauffage, comprenant un entraînement rotatif (3), un mécanisme d'engrenage et un commutateur pour la désactivation électrique de l'entraînement dans les positions d'extrémité de soupape, le mécanisme d'engrenage (7) est configuré pour convertir le mouvement rotatif en un mouvement linaire de sorte que lorsque l'entraînement rotatif (3) est en mouvement continu, la sortie à mouvement translatoire du mécanisme d'engrenage produise un mouvement de temps de déplacement non linéaire et/ou un comportement de force de déplacement non linéaire dans les deux directions de mouvement, **caractérisé en ce que** l'entraînement rotatif (3), le mécanisme d'engrenage (7) et le commutateur (17) sont agencés dans une base (6) et le mécanisme d'engrenage (7) inclut un mécanisme de liaison (8) ou un mécanisme bielle-manivelle (10) comprenant une roue de manivelle (15) et un culbuteur (16, 17).

4. Unité d'entraînement pour l'actionnement translatoire d'une soupape de commutation (2) pour des dispositifs de chauffage selon la revendication 3, dans laquelle un élément de ressort (14) est agencé dans le flux de forces du mécanisme d'engrenage (7) de sorte que la position du point de couplage (12) de la sortie translatoire soit variable par des forces rétroactives de la tige d'actionnement de soupape (4).

5. Unité d'entraînement pour l'actionnement translatoire d'une soupape de commutation (2) pour des dispositifs de chauffage selon la revendication 3 ou 4, dans laquelle le mécanisme d'engrenage (7) pour la conversion du mouvement rotatif en un mouvement linéaire est configuré comme un mécanisme bielle-manivelle (10), la roue de manivelle (15) est entraînée par l'entraînement rotatif (3) et la tige d'actionnement de soupape (4) est déplacée par translation à l'aide du culbuteur (16) et d'un point de couplage (12), et la position du point de pivotement du culbuteur (16) est variable à l'aide d'un élément de ressort (14) en fonction de la force.

6. Unité d'entraînement pour l'actionnement translatoire d'une soupape de commutation (2) pour des dispositifs de chauffage selon la revendication 3 ou 4, dans laquelle le mécanisme d'engrenage (7) pour la conversion du mouvement rotatif en un mouvement linéaire est conçu comme un mécanisme bielle-manivelle (10) et la roue de manivelle (15) est entraînée par l'entraînement rotatif (3) et la tige d'actionnement de soupape (4) est déplacée par translation à l'aide du culbuteur (17) et d'un point de couplage (12), dans laquelle le bras (17) est un culbuteur résilient (17).

7. Unité d'entraînement pour l'actionnement translatoire d'une soupape de commutation (2) pour des dispositifs de chauffage selon l'une quelconque des revendications 3 à 6, dans laquelle un indicateur de position mécanique (21) est agencé de sorte qu'il soit visible depuis l'extérieur, indiquant que la tige d'actionnement de soupape (4) de la soupape de commutation (2) est située dans une position d'extrémité de soupape.

8. Unité d'entraînement pour l'actionnement translatoire d'une soupape de commutation (2) pour des dispositifs de chauffage selon la revendication 5 ou 6, dans laquelle un indicateur de position mécanique (21) est agencé de sorte qu'il soit visible de l'extérieur et la roue de manivelle (15) présente un contour de position (22) qui déplace l'indicateur de position (21) le long d'une voie guidée dans le logement, indiquant que la tige d'actionnement de soupape (4) de la soupape de commutation (2) est située dans une position d'extrémité de soupape.
